# NEUE EUROPÄISCHE PATENTSCHRIFT

(11) **EP 3 110 701 B2**
(45) Veröffentlichungstag und Bekanntmachung des Hinweises auf die Entscheidung über den Einspruch: **28.08.2024**
(45) Hinweis auf die Patenterteilung: 01.04.2020
(21) Anmeldenummer: 15706436.1
(22) Anmeldetag: 19.02.2015
(51) Int. Cl.: B65C 9/40, B67B 3/26, B67C 3/00, G01N 21/90

(54) **BEHÄLTERINSPEKTIONSVORRICHTUNG**
CONTAINER INSPECTION DEVICE
DISPOSITIF D'INSPECTION DE RECIPIENTS

(30) Priorität: 25.02.2014 DE 102014102449
(43) Veröffentlichungstag der Anmeldung: 04.01.2017
(73) Patentinhaber: KHS GmbH, 44143 Dortmund (DE)
(72) Erfinder: HERRMANN, Jürgen-Peter, 57520 Rosenheim (DE); HERRMANN, Marius Michael, 57520 Rosenheim (DE); SCHORN, Wolfgang, 53506 Hönningen (DE); ZHANG, Xiang, 58300 Wetter (DE)
(74) Vertreter: Kalkoff & Partner Patentanwälte mbB
(86) Internationale Anmeldenummer: PCT/EP2015/053547
(87) Internationale Veröffentlichungsnummer: WO 2015/128245

(56) Entgegenhaltungen:
- EP-A1- 0 071 068
- EP-A1- 1 715 328
- EP-A1- 2 450 695
- EP-A2- 0 467 211
- WO-A1-03/024859
- WO-A1-2008/104273
- WO-A1-2013/013771
- WO-A2-98/19150
- DE-A1- 10 065 290
- DE-A1- 10 140 009
- DE-A1- 10 146 449
- DE-A1- 102007 054 657
- DE-A1- 102008 029 661
- DE-A1- 102008 034 744
- DE-A1- 102008 053 876
- DE-A1- 102008 062 385
- DE-A1- 102010 004 972
- DE-A1- 102010 050 673
- DE-B3- 102012 009 783
- DE-B3- 102012 100 987
- DE-B4- 10 140 009
- DE-U1- 9 311 405
- GB-A- 2 061 491
- JP-A- H09 169 392
- US-A- 4 713 536
- US-A- 4 736 851
- US-A- 4 816 668
- US-A- 5 903 341
- US-A1- 2003 009 984
- US-A1- 2008 291 438
- LAMPRECHT J: "VISIONSYSTEM AUTOMATISIERT DAS ABFUELLEN VON GETRAENKEN", ELEKTROTECHNIK FUER DIE AUTOMATISIERUNG, VOGEL BUSINESS MEDIA GMBH & CO.KG, vol. 80, no. 11, 5 November 1998 (1998-11-05), pages 146,149, XP000875336, ISSN: 1431-9578

## Beschreibung

Die Erfindung betrifft eine Behälterbehandlungsanlage mit einer Inspektionsvorrichtung zum Überprüfen von Behältern und einer Behältertransportvorrichtung zum Verlagern der Behälter in eine Inspektionsposition der Inspektionsvorrichtung.

Beim Durchführen eines Behälters durch eine Behälterbehandlungsanlage mit unterschiedlichen Arbeitsstationen ist es üblich, verschiedene Merkmale des Behälters zu überprüfen. So können beispielsweise die Befüllmenge des Behälters, der Sitz eines Etikettes am Behälter oder auch die Position eines Behälterverschlusses bzw. eines Logos auf dem Behälterverschluss kontrolliert werden.

Verschiedene Merkmale des Behälters müssen auch mehrfach während des Durchführens durch die Behälterbehandlungsanlage überprüft werden, um den Behälter beispielsweise vor einer Arbeitsstation in eine richtige Position zu bewegen. Auch können bei einer Endkontrolle des Behälters zahlreiche unterschiedliche Überprüfungsvorgänge durchgeführt bzw. wiederholt durchgeführt werden. Eine modular aufgebaute Inspektionsvorrichtung mit besonders einfach austauschbaren Kontrollstationen ist aus der DE 10 2010 043 635 A1 bekannt.

Die zahlreichen einzelnen Kontrollstationen zum Durchführen der Prüfungsvorgänge nehmen bei den bekannten Vorrichtungen jedoch einen großen Bauraum in Anspruch. Auch muss der Behälterstrom an jeder einzelnen Kontrollstation wiederholt kurzzeitig gestoppt bzw. zumindest verlangsamt werden, wodurch die Durchlaufgeschwindigkeit des Behälters herabgesetzt wird.

Aus Dokument WO 2008/104273 A1 sind ein Verfahren und eine dazugehörige Inspektionsvorrichtung bekannt, mit der die Gesamttopographie eines Behälters erfasst wird. Der hieraus gebildete, einen dreidimensionalen Behälter darstellende Datensatz, der einen Ist-Zustand des Behälters abbildet, wird mit einem Soll-Zustand verglichen, um einzelne vom Soll-Zustand abweichende Merkmale zu ermitteln.

Dokument EP 1 715 328 A1 dagegen offenbart eine Inspektionsvorrichtung, die eine verbesserte Aufnahme des Behälters in einer Einhausung ermöglicht. Hierfür offenbart die EP 1 715 328 A1 eine spezielle Innenausgestaltung der Einhausung. Aus der WO 03/024859 A2 ist zudem eine Vorrichtung zur optischen Kontrolle von Verschlüssen auf Gefäßen bekannt. Die DE 10 2008 062 385 A1 offenbart eine Vorrichtung zur optischen Überprüfung eines Originalsicherungsringes an den Verschlüssen von Behältern. Die DE 10 2008 034 744 A1 beschreibt dagegen Kontrollvorrichtungen zum Ermitteln eines richtigen Etikettensitzes auf Behältern.

EP 2 450 695 A1 offenbart eine Vorrichtung zum Inspizieren von Behältern mit einem Traggestell, an dem mehrere Kontrollmodule angeordnet werden können, die unterschiedliche Kontrollfunktionen haben, wie z.B. Behälterseitenwand, Verschluss oder Befüllzustand. Jedes Kontrollmodul stellt dabei eine eigene Einheit dar, die ein spezifisches Behältermerkmal kontrolliert. Die Kontrollmodule können an der Befestigungsvorrichtung des Traggestells nebeneinander, in beliebiger Position befestigt werden. Neben der eigentlichen Befestigungsvorrichtung können, bspw. besonders große Kontrollmodule auch seitlich am Traggestell montiert werden. Jedes Kontrollmodul agiert dabei eigenständig und erfasst den Behälter in jeweils einer dem einzelnen Kontrollmodul zugeordneten Inspektionsposition.

Der Erfindung liegt somit die Aufgabe zu Grunde, eine Behälterbehandlungsanlage mit einer zum Überprüfen einer Mehrzahl von Behältermerkmalen ausgebildeten besonders kompakten Inspektionsvorrichtung bereitzustellen, mit der eine auswählbare Anzahl von unterschiedlichen Behältermerkmalen ermittelt werden kann und die eine hohe Durchlaufgeschwindigkeit des Behälters ermöglicht.

Die Erfindung löst die Aufgabe durch eine Behälterbehandlungsanlage mit den Merkmalen des Anspruchs 1. Vorteilhafte Weiterbildungen der Erfindung sind in den abhängigen Ansprüchen angegeben.

Die erfinderische Behälterbehandlungsanlage weist eine Inspektionsvorrichtung zum Überprüfen von Behältern, insbesondere von Getränkebehältern, und eine Behältertransportvorrichtung zum Verlagern der Behälter in eine Inspektionsposition der Inspektionsvorrichtung auf, wobei die Inspektionsvorrichtung mindestens drei zu einer Baueinheit zusammengefasste Kontrollmodule aus der Gruppe:
- Kontrollmodul zum Überprüfen eines Originalitätssicherungselementes an einem Behälterverschluss,
- Kontrollmodul zur Feststellung einer Befüllmenge des Behälters,
- Kontrollmodul zur Lageerfassung eines Verschlusslogos an dem Behälterverschluss,
- Kontrollmodul zur Feststellung einer Codeposition am Behälter und/oder
- Kontrollmodul zur Lageerfassung eines Behälteretiketts aufweist, wobei der Behälter in der Inspektionsposition von mindestens zwei Kontrollmodulen erfassbar ist.

Die Zusammenfassung von mindestens drei Kontrollmodulen zu einer Baueinheit ermöglicht eine besonders kompakte Ausbildung der Inspektionsvorrichtung. Hierdurch wird der notwendige Bauraum der Inspektionsvorrichtung deutlich verringert und die Inspektionsvorrichtung ist besonders einfach in die Behälterbehandlungsanlage und insbesondere in einen Behältertransportweg, d.h. entlang einer Transportstrecke des Behälters durch die Behälterbehandlungsanlage anordbar.

Zudem ermöglicht die Inspektionsvorrichtung mit mindestens drei Kontrollmodulen eine besonders breite Einsatzmöglichkeit. So kann die Baueinheit an einer Vielzahl unterschiedlicher Positionen entlang der Transportstrecke angeordnet werden und ermöglicht auf einem besonders kurzen Streckenabschnitt der Transportstrecke eine Mehrzahl von Überprüfungsmöglichkeiten der Behältermerkmale.

Bei den Behältern handelt es sich beispielsweise um Getränkebehälter. Dies können insbesondere Getränkeflaschen aus Kunststoff oder Glas sein, die beispielsweise zumindest teilweise transparent sind.

Unter einer Behälterbehandlungsanlage kann eine einzelne Behälterbearbeitungsstation oder eine Vielzahl von Behälterbearbeitungsstationen, die der Behälter nacheinander durchläuft, verstanden werden. Die Behältertransportanlage ist dazu ausgelegt, den Behälter durch die Behälterbehandlungsanlage, d.h. durch oder an den einzelnen Stationen der Behälterbehandlungsanlage, vorbei zu führen. Hierfür weist die Behältertransportanlage insbesondere eine Vielzahl von Transporteuren zum linearen oder bogenförmigen Transport der Behälter oder auch Transportsterne zum Transport der Behälter auf einer Kreisbahn auf. Die Behältertransportvorrichtung transportiert folglich die Behälter entlang eines Behältertransportweges durch die Behälterbehandlungsanlage.

Unter der Inspektionsposition wird die Position des Behälters verstanden, in der ein Kontrollmodul den Behälter inspizieren kann, d.h. beispielsweise ein Merkmal des Behälters überprüfen, erfassen oder auch feststellen kann. Unter den Merkmalen sind in diesem Zusammenhang insbesondere in den Behälter eingebrachte oder an den Behälter angebrachte Markierungen, Embossings, Codes, Etiketten oder Eigenschaften des Behälterkörpers an sich, jedoch auch Merkmale wie beispielsweise der Füllstand eines Behälters zu verstehen.

Unter einem Kontrollmodul ist in diesem Zusammenhang eine Vorrichtung zu verstehen, die einen Ist-Zustand eines der Merkmale des Behälters inspiziert und diesen gegebenenfalls unter Zuhilfenahme einer Auswertungs- oder Steuerungseinheit mit einem Soll-Zustand vergleicht.

Dabei sind die Kontrollmodule insbesondere zur optischen Erfassung, d.h. beispielsweise zur bildlichen Erfassung eines Merkmals, ausgebildet. Abhängig von den zu erfassenden Merkmalen kann das Kontrollmodul jedoch auch eine anderweitige Sensorik zum Inspizieren eines Merkmals aufweisen.

Für eine besonders kompakte Ausbildung des Bauelementes und eine besonders vielseitige Einsatzmöglichkeit ist nach einer Weiterbildung der Erfindung vorgesehen, dass mindestens drei, bevorzugt mindestens vier oder besonders bevorzugt mindestens fünf Kontrollmodule zu einer Baueinheit zusammengefasst sind.

Zum Inspizieren der Behälter durch die Kontrollmodule wird der Behälterstrom zumindest kurzfristig im Bereich der Inspektionsposition verlangsamt oder kurzzeitig gestoppt.

Erfindungsgemäß ist der Behälter in der Inspektionsposition von mindestens drei Kontrollmodule, bevorzugt mindestens vier Kontrollmodulen, vorzugsweise mindestens fünf Kontrollmodulen erfassbar.

Das Inspizieren des Behälters durch mehrere Kontrollmodule in einer einzigen Inspektionsposition ist besonders vorteilhaft, da die Durchlaufgeschwindigkeit der Behälter kaum verringert wird. Dabei kann das Inspizieren des Behälters beispielsweise von mehreren Kontrollmodulen gleichzeitig erfolgen. Auch können die einzelnen Kontrollmodule beispielsweise alle nacheinander den Inspektionsvorgang am Behälter durchführen.

Üblicherweise werden die Behälter zum Inspizieren an den Kontrollmodulen vorbeigeführt. Um die zu einer Baueinheit zusammengefassten Kontrollmodule jedoch besonders kompakt zu gestalten, ist nach einer Weiterbildung der Erfindung vorgesehen, dass die Behältertransportvorrichtung einen durch die Inspektionsvorrichtung führenden Behältertransportweg aufweist, entlang dem der Behälter durch die Inspektionsvorrichtung transportiert wird. D.h., dass die Behälter durch die Inspektionsvorrichtung durchgeführt und somit entweder durch die Kontrollmodule hindurch und/oder an diesen entlanggeführt werden.

Wie bereits oben erwähnt, sind die Kontrollmodule insbesondere zum optischen Inspizieren der Behälter ausgelegt. D.h., die Kontrollmodule können insbesondere ein Bild von dem Behälter bzw. eines Behälterabschnitts mit dem zu inspizierenden Merkmal erstellen. Um eine besonders hohe Genauigkeit des Kontrollmoduls bei der Inspektion des Behältermerkmals zu erreichen, ist nach einer Weiterbildung der Erfindung vorgesehen, dass die Inspektionsvorrichtung ein Beleuchtungsmittel, insbesondere eine Durchlichtbeleuchtung zum Durchleuchten des Behälters, eine Ringbeleuchtung und/oder eine Auflichtbeleuchtung zum Anleuchten des Behälters, aufweist.

Das Beleuchtungsmittel kann derart angeordnet und ausgebildet sein, dass es für alle von der Baueinheit umfassten Kontrollmodule ausreichend Licht zur Verfügung stellt. Insbesondere bei der Anordnung unterschiedlicher Beleuchtungsmittel, wie einer Durchlichtbeleuchtung, einer Ringbeleuchtung oder einer Auflichtbeleuchtung, können die einzelnen Beleuchtungsmittel dazu ausgebildet sein, für ein oder mehrere Kontrollmodule eine besondere Lichtsituation bereitzustellen. Die Beleuchtungsmittel können daher separat voneinander angeordnet und separat steuerbar sein. Sie werden insbesondere im Zeitpunkt des Inspektionsvorgangs des jeweiligen Kontrollmoduls kurz aktiviert. Dabei ist es beispielsweise auch möglich, unterschiedliche Beleuchtungsmittel, wie beispielsweise die Ringbeleuchtung und die Auflichtbeleuchtung, gleichzeitig bei dem Inspektionsvorgang eines Kontrollmoduls oder mehrerer Kontrollmodule zu aktivieren. Folglich ist es ebenfalls möglich, die Beleuchtungsmittel derart anzusteuern, dass einzelne Beleuchtungsmittel während des Inspektionsvorgangs eines Kontrollmoduls nicht aktiviert sind, während andere Beleuchtungsmittel aktiviert sind.

Um eine besonders gute Ausleuchtung des Behälters von seiner Oberseite zu erreichen, beispielsweise um eine Lageerfassung eines Verschlusslogos an einem Behälterverschluss zu verbessern, ist die Ringbeleuchtung besonders bevorzugt koaxial um eine Längsachse des Behälters in der Inspektionsposition angeordnet.

Hierbei ist die Ringbeleuchtung insbesondere in einer Ebene oberhalb des Behälters angeordnet. Die Ringbeleuchtung ermöglicht somit eine von allen Seiten gleichmäßige Beleuchtung des Behälters bzw. zumindest eines oberen Behälterabschnitts, wie beispielsweise eines Flaschenhalses und/oder eines Behälterverschlusses.

Um den Behälter von einer Seite besonders gleichmäßig auszuleuchten oder um insbesondere einen Behälterabschnitt, an dem beispielsweise ein Etikett angeordnet ist, einseitig besonders gut auszuleuchten, weist die Auflichtbeleuchtung besonders bevorzugt zwei im Abstand voneinander auf einer ersten Seite des Behältertransportweges angeordnete Leuchtkörper auf.

Die Leuchtkörper sind dabei beispielsweise derart angeordnet, dass sie im Bereich eines Etikettes und hier insbesondere an einer Oberkante und an einer Unterkante eines Etikettes angeordnet sind. Dabei erstrecken sich die Leuchtkörper insbesondere quer zur Längsachse des Behälters, so dass gewährleistet ist, dass der Behälter zumindest von einer Seite (beispielsweise ein Umfang von 180°) vollständig beleuchtet wird.

Nach einer Weiterbildung der Erfindung ist ferner vorgesehen, dass die Durchlichtbeleuchtung einen auf einer zweiten Seite des Behältertransportweges angeordneten flächigen Leuchtkörper aufweist.

Um eine besonders gute Ausleuchtung des Behälters, beispielsweise zum Erfassen eines Durchlichtabbildes (wie eines Schattenbildes) des Behälters oder eines Behälterabschnittes zu ermöglichen, erstreckt sich der die Durchlichtbeleuchtung darstellende Leuchtkörper besonders in Längsachsenrichtung und quer zur Längsachsenrichtung des Behälters. Er kann beispielsweise als rechtwinkliger Leuchtkörper ausgebildet sein.

Wie bereits oben erwähnt, erfolgt die Inspektion der Kontrollmodule insbesondere optisch. Um zudem beispielsweise die Inspektion des Behälters von mehreren Kontrollmodulen in einer einzelnen Inspektionsposition zu ermöglichen, ist nach einer Weiterbildung der Erfindung vorgesehen, dass mindestens ein Kontrollmodul mindestens eine Kamera und/oder mindestens ein Strahlenumlenkungselement zur optischen Überprüfung des Behälters aufweist.

Die Strahlenumlenkungselemente ermöglichen dabei die Anordnung der Kamera in einer indirekten Position, d.h. in einer Position, in der das von der Kamera zu erfassende Merkmal nicht im direkten Erfassungsbereich der Kamera liegt, wenn der Behälter in der Inspektionsposition ist. Dementsprechend können abhängig von der Positionierung der Kamera auch mehrere zu einer Kamera gehörende Strahlenumlenkungselemente angeordnet sein.

Beispielweise können bei einem Kontrollmodul zum Überprüfen des Originalitätssicherungselementes, das zum Erfassen eines 180°-Teilbereiches des Originalitätssicherungselementes ausgebildet ist, auf eine Kamera bis zu fünf Strahlenumlenkungselemente zugeordnet sein.

Die Strahlenumlenkungselemente können beispielsweise als flächige Spiegel ausgebildet sein. Auch können die Strahlenumlenkungselemente Baukörper mit mehreren Spiegelflächen, insbesondere im Querschnitt dreieckig ausgebildete Baukörper sein. Auch können Strahlenumlenkungselemente als Prisma ausgebildet sein, die einen Lichtstrahl umlenken und/oder bündeln.

Um eine besonders kompakte Ausführung der Baueinheit bereitzustellen, ist nach einer Weiterbildung der Erfindung vorgesehen, dass mindestens eine Kamera in einer oberhalb der Transportvorrichtung angeordneten oberen Kameraebene angeordnet ist. Alternativ oder ergänzend ist besonders bevorzugt mindestens eine Kamera in einer parallel zur oberen Kameraebene in Richtung auf die Transportvorrichtung verschobenen unteren Kameraebene angeordnet.

In diesem Zusammenhang wird bei der Anordnung mehrerer Kameras unter einer Ebene verstanden, dass die Kameras einer Ebene weitestgehend den gleichen Abstand zur Transportebene aufweisen. D. h., die senkrechte Höhenposition der Kameras einer Ebene ist zumindest weitestgehend gleich.

Um die Baueinheit besonders kompakt auszubilden und die Einsatzmöglichkeit der Baueinheit für besonders viele Merkmale des Behälters auszugestalten, ist nach einer Weiterbildung der Erfindung vorgesehen, dass
- das Kontrollmodul zum Überprüfen des Originalitätssicherungselementes in einem Einfahrbereich des Behälters in der Inspektionsvorrichtung und/oder in einem Ausfahrbereich des Behälters aus der Inspektionsvorrichtung mindestens eine Kamera und ein Strahlenumlenkungselement aufweist und/oder
- das Kontrollmodul zur Feststellung der Befüllmenge des Behälters und/oder das Kontrollmodul zur Feststellung der Codeposition am Behälter und/oder das Kontrollmodul zur Lageerfassung des Behälteretiketts auf der ersten Seite des Transportweges eine Kamera und ein Strahlenumlenkungselement aufweist, und/oder
- das Kontrollmodul zur Lageerfassung des Verschlusslogos an dem Behälterverschluss eine senkrecht über der Inspektionsposition angeordnete Kamera aufweist.

Im Weiteren wird die Erfindung anhand eines Ausführungsbeispiels näher beschrieben. Es zeigt:
- Fig. 1: schematisch in perspektivischer Darstellung eine an einer Behältertransportanlage angeordnete Inspektionsvorrichtung mit fünf zu einer Baueinheit zusammengefassten Kontrollmodulen;
- Fig. 2: schematisch in einem Querschnitt die Inspektionsvorrichtung aus Fig. 1.

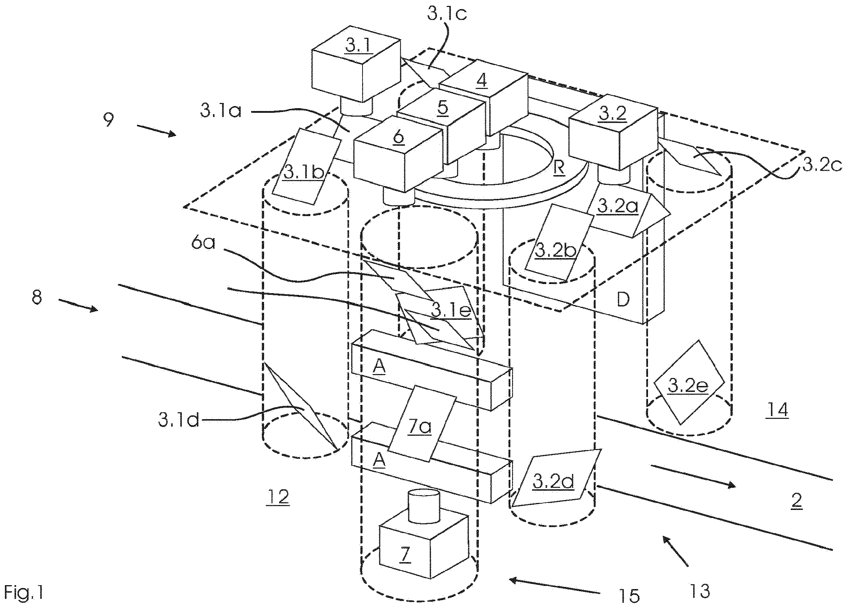

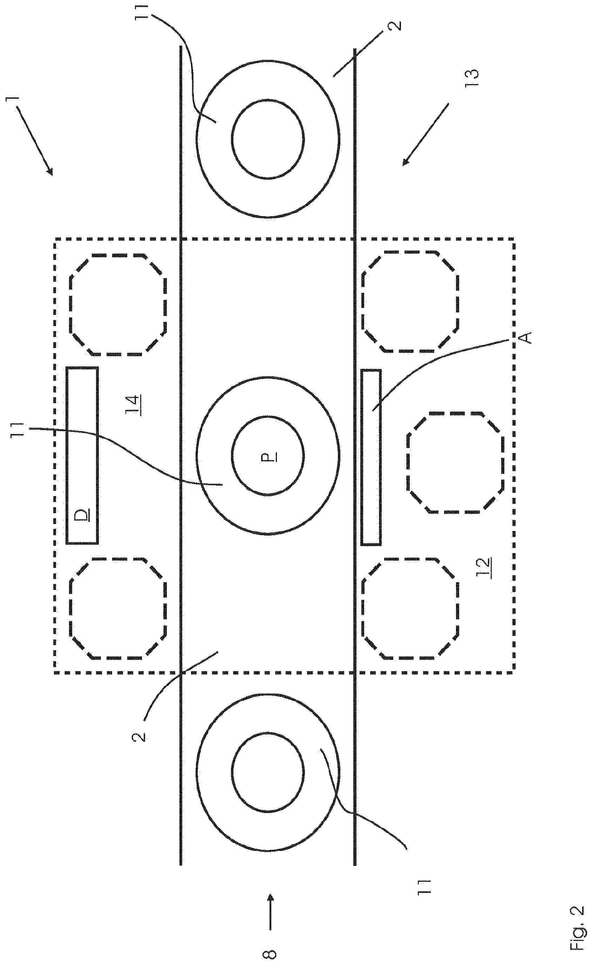

Fig. 1 zeigt eine Inspektionsvorrichtung 1, die an einer zu einer Behälterbehandlungsanlage (hier nicht dargestellt) gehörenden Behältertransportvorrichtung 2 angeordnet ist. Die Behältertransportvorrichtung 2 führt die Behälter 11 (siehe Fig. 2), in diesem Fall insbesondere transparente Flaschen, entlang einer Transportstrecke durch die Behälterbehandlungsanlage durch. Die Transportrichtung ist durch einen Pfeil dargestellt.

Die Inspektionsvorrichtung 1 weist fünf verschiedene, zu einer Baueinheit zusammengefasste Kontrollmodule auf. Ein erstes Kontrollmodul ist zum Überprüfen eines Qualitätssicherungselementes an einem Behälterverschluss (hier nicht dargestellt) ausgebildet. D.h., das Kontrollmodul kann einen an einem Behälterverschluss angeordneten Sicherungsring inspizieren, der beim Öffnen des Behälterverschlusses beschädigt werden soll.

Um den Sicherungsring, der den Flaschenhals vollständig umläuft, von allen Seiten (total side inspection) zu überprüfen, weist das erste Kontrollmodul zwei Kameras 3.1, 3.2 zur Bilderfassung auf. Die Kameras 3.1, 3.2 sind beabstandet voneinander angeordnet, wobei die erste Kamera 3.1 im Bereich eines Behältereinlaufs 8 und senkrecht über der Behältertransportvorrichtung 2 in einem Bereich einer oberen Kameraebene 9 angeordnet ist. Die zweite Kamera 3.2 des ersten Kontrollmoduls ist ebenfalls in einem Bereich der oberen Kameraebene 9 und senkrecht über der Behältertransportvorrichtung 2, jedoch im Bereich eines Behälterauslaufs 13 aus der Inspektionsvorrichtung 1, angeordnet.

Zu jeder Kamera 3.1, 3.2 gehören fünf Strahlenumlenkungselemente 3.1a -3.1e, 3.2a-3.2e. Senkrecht unter jeder Kamera 3.1, 3.2 ist jeweils ein dreieckiges Strahlenumlenkungselement 3.1a, 3.2a mit zwei Spiegelflächen angeordnet. Jede der Spiegelflächen ist wiederum zu jeweils einer weiteren Spiegelfläche eines oberen Strahlenumlenkungselementes 3.1b, 3.1d, 3.2b, 3.2d ausgerichtet.

Die Spiegelflächen der oberen Strahlenumlenkungselemente 3.1b, 3.1d, 3.2b, 3.2d sind wiederum zu jeweils einem als Spiegel ausgebildeten unterem Strahlenumlenkungselement 3.1d, 3.1e, 3.2d, 3.2e ausgerichtet. Folglich sind die oberen Strahlenumlenkungselemente 3.1a - 3.1c, 3.2a - 3.2c in einer zur Transportvorrichtung parallel angeordneten oberen Strahlenumlenkungsebene und die unteren Strahlenumlenkungselemente 3.1d, 3.1e, 3.2d, 3.2e in einer unteren Strahlenumlenkungsebene angeordnet.

Die unteren Strahlenumlenkungselemente 3.1d, 3.1e, 3.2d, 3.2e sind zudem auf eine Inspektionsposition P (siehe Fig. 2) ausgerichtet, so dass ein Behälterverschluss eines sich in der Inspektionsposition P befindenden Behälters (11) über die Strahlenumlenkungselemente 3.1a-3.2e überprüft werden kann.

Ein zweites Kontrollmodul weist ebenfalls eine im Bereich der oberen Kameraebene 9 angeordnete Kamera 4 zur Bilderfassung auf, die zur Lageerfassung eines Logos auf einer Behälterverschlussoberseite ausgebildet und senkrecht über der Inspektionsposition P, d.h. in Verlängerung der Längsachse des Behälters (11), angeordnet ist. Das zweite Kontrollmodul erfasst die Lage des Logos somit ebenfalls, sobald der Behälter 11 in der Inspektionsposition P ist.

Ein drittes Kontrollmodul weist, wie das erste und zweite Kontrollmodul, eine senkrecht über der Behältertransportvorrichtung 2 und in der oberen Kameraebene 9 angeordnete Kamera 5 auf, die zum Feststellen der Füllmenge im Behälter 11 ausgebildet ist. Die Kamera 5 und ein ihr zugeordnetes Strahlenumlenkungselement 5a sind im Bereich einer ersten Seite 12 der Transportstrecke der Behältertransportvorrichtung 2 angeordnet.

Ein viertes Kontrollmodul weist ebenfalls eine senkrecht über der Behältertransportvorrichtung 2 und in der oberen Kameraebene 9 angeordnete Kamera 6 auf, die zur Feststellung einer Codeposition ausgebildet ist. Entsprechend der Kamera 5 zum Feststellen der Füllmenge ist auch die Kamera 6 des vierten Kontrollmoduls und ein ihr zugeordnetes Strahlenumlenkungselement 6a im Bereich der ersten Seite 12 der Transportstrecke der Behältertransportvorrichtung 2 angeordnet.

Das fünfte Kontrollmodul ist zur Lageerfassung eines Etiketts am Behälter 11 ausgebildet und weist eine Kamera 7 zur Bilderfassung auf, die zusammen mit einem ihr zugeordneten Strahlenumlenkungselement 7a ebenfalls im Bereich der ersten Seite 12 der Transportstrecke angeordnet ist. Die Kamera 7 des fünften Kontrollmoduls ist jedoch in einer zur oberen Kameraebene 9 senkrecht in Richtung der Behältertransportvorrichtung 2 verschobenen unteren Kameraebene 15 angeordnet.

Um eine besonders gute Ausleuchtung des Behälters (11) in der Inspektionsposition beim Inspizieren zu erreichen, sind drei verschiedene Beleuchtungsmittel angeordnet.
Zum einen ist angrenzend und unterhalb der oberen Kameraebene 9 eine Ringbeleuchtung R angeordnet, die sich koaxial um eine senkrechte Längsachse der Inspektionsposition P erstreckt. Die Ringbeleuchtung R beleuchtet insbesondere das Verschlusslogo am Behälterverschluss.

Auf der zweiten Seite 14 der Transportstrecke der Behältertransportvorrichtung 2 ist ein flächiger (rechtwinkliger) Durchlichtbeleuchtungskörper D angeordnet. Der Durchlichtbeleuchtungskörper D dient insbesondere für eine Durchleuchtung des (transparenten) Behälters (11) (Flasche), beispielsweise bei der Überprüfung des Originalitätssicherungselementes, mittels des ersten Kontrollmoduls bzw. bei dem Erfassen der Befüllmenge des Behälters (11) mittels des zweiten Kontrollmoduls.

Am Durchlichtbeleuchtungskörper D kann beispielsweise für eine besonders gute Ausleuchtung des Behälters 11 eine Linse (hier nicht dargestellt), insbesondere eine Folienlinse, angeordnet sein, die die Lichtstrahlen des Durchlichtbeleuchtungskörper D in eine bestimmte Raumrichtung, beispielsweise in eine Raumrichtung senkrecht zur Oberfläche des Durchlichtbeleuchtungskörper D, ausrichtet.

Zusätzlich ist eine Auflichtbeleuchtung A angeordnet, die insbesondere zur besseren Ausleuchtung der zur ersten Seite 12 der Transportstrecke ausgerichteten Seite des Behälters 11 geeignet ist. Diese kann daher beispielsweise bei der Lageerfassung des Behälteretiketts oder auch zur Feststellung der Codeposition genutzt werden. Die Auflichtbeleuchtung A ist auf der ersten Seite der Transportstrecke angeordnet und besteht aus zwei senkrecht voneinander beabstandeten Leuchtkörpern, die sich quer zur Längsachse des Behälters erstrecken. Die Auflichtbeleuchtung A ist parallel zur Durchlichtbeleuchtung D angeordnet.

Im Betrieb wird ein Behälterstrom aus einer Vielzahl von Behältern 11, in diesem Fall befüllte transparente Getränkeflaschen, mittels der Transportvorrichtung 2 in die Inspektionsvorrichtung 1 eingefahren. Die Behälter 11 wurden vor dem Einfahren derart ausgerichtet, dass das Etikett an den Behältern 11 in Richtung zur ersten Seite 12 der Transportstrecke zeigt. Alternativ kann beispielsweise auch ein weiteres zur Baueinheit gehörendes Kontrollmodul zur Lageerfassung des Behälters 11 und zur Positionierung des Behälters 11 vorgesehen sein.

Sobald ein Behälter 11 sich in der Inspektionsposition P befindet, werden die Kontrollmodule in schneller Folge nacheinander aktiviert. Gleichzeitig mit den Kontrollmodulen werden die jeweiligen Beleuchtungsmittel D, A, R aktiviert, um eine besonders gute Ausleuchtung des Behälters 11 zum Zeitpunkt der Inspektion zu erreichen.

So wird beispielsweise beim Aktivieren der Kameras 3.1, 3.2 zum Erfassen des Originalitätssicherungselementes, die Durchlichtbeleuchtungskörper D und gegebenenfalls zusätzlich die Ringbeleuchtung R aktiviert. Bei der Lageerfassung des Verschlusslogos wird beispielsweise die Ringbeleuchtung R aktiviert, während beim Aktivieren des Kontrollmoduls zur Feststellung der Füllmenge beispielsweise der Durchlichtbeleuchtungskörper D aktiviert wird. Letztlich wird beispielsweise mit der Aktivierung der Kontrollmodule zur Feststellung einer Codeposition am Behälter 11 bzw. zur Lageerfassung des Behälteretikettes die Auflichtbeleuchtung A aktiviert.

Alternativ hierzu können die Beleuchtungsmittel zu den Kontrollmodulen auch anderweitig geschaltet werden, sofern hierdurch eine bessere Beleuchtung des Behälters 11 bei der Inspektion durch das jeweilige Kontrollmodul erreicht wird. Auch ist es beispielsweise möglich, einzelne oder mehrere Beleuchtungsmittel während der Inspektion eines Kontrollmoduls oder mehrerer Kontrollmodule aktiviert zu lassen.

Die Reihenfolge der Aktivierung der Kontrollmodule und der dazugehörigen Beleuchtungsmittel A, D, R ist beliebig. So ist es beispielsweise alternativ auch möglich, ein, zwei, drei oder vier Kontrollmodule gleichzeitig miteinander zu aktivieren. Zu beachten ist hierbei ausschließlich, dass für eine besonders gute Qualität der Bilderfassung sich gegensätzlich verhaltende Kontrollmodule/Beleuchtungseinheiten nicht gleichzeitig, sondern nacheinander aktiviert werden sollten. So sollte z.B. ein Kontrollmodul, das auf eine Durchsichtbeleuchtung angewiesen ist, nach Möglichkeit nicht aktiviert werden, sobald die Auflichtbeleuchtung aktiviert wird.

Nachdem alle notwendigen Kontrollmodule aktiviert wurden, wird der Behälter 11 mittels der Transportvorrichtung 2 wieder aus der Inspektionsvorrichtung 1 heraus transportiert.

Grundsätzlich sind die Beleuchtungseinheiten beispielsweise zum Erzeugen von Weißlicht ausgebildet. Dies betrifft insbesondere das Durchlichtbeleuchtungselement D. Alternativ ist es beispielsweise auch möglich ein oder mehrere der Beleuchtungselemente A, R, D zum Erzeugen einer anderen Lichtart, beispielsweise eines Infrarotlichts, auszubilden.

### Bezugszeichenliste

- 1: Inspektionsvorrichtung
- 2: Behältertransportvorrichtung
- 3.1: Kamera zur Bilderfassung
- 3.2: Kamera zur Bilderfassung
- 3.1a - 3.2e: Strahlenumlenkungselement
- 4: Kamera zur Bilderfassung
- 4a: Strahlenumlenkungselement
- 5: Kamera zur Bilderfassung
- 5a: Strahlenumlenkungselement
- 6: Kamera zur Bilderfassung
- 6a: Strahlenumlenkungselement
- 7: Kamera zur Bilderfassung
- 7a: Strahlenumlenkungselement
- 8: Behältereinführungsbereich
- 9: obere Kameraebene
- 10: Baueinheit
- 11: Behälter
- 12: erste Seite einer Transportstrecke
- 13: Behälterausführungsbereich
- 14: zweite Seite einer Transportstrecke
- 15: untere Kameraebene

- P: Inspektionsposition
- A: Auflichtbeleuchtung
- R: Ringbeleuchtung
- D: Durchlichtbeleuchtung

## Patentansprüche

1. Behälterbehandlungsanlage mit
- einer Inspektionsvorrichtung (1) zum Überprüfen von Behältern (11), insbesondere Getränkebehälter, und
- einer Behältertransportvorrichtung (2) zum Verlagern der Behälter (11) in eine Inspektionsposition (P) der Inspektionsvorrichtung (1), wobei die Inspektionsvorrichtung (1) mindestens drei zu einer Baueinheit zusammengefasste Kontrollmodule aus der Gruppe:
- Kontrollmodul zum Überprüfen eines Originalitätssicherungselementes an einem Behälterverschluss,
- Kontrollmodul zur Feststellung einer Befüllmenge des Behälters (11),
- Kontrollmodul zur Lageerfassung eines Verschlusslogos an dem Behälterverschluss,
- Kontrollmodul zur Feststellung einer Codeposition am Behälter (11) und/oder
- Kontrollmodul zur Lageerfassung eines Behälteretiketts aufweist, wobei der Behälter (11) in der einzigen Inspektionsposition (P) von mindestens zwei Kontrollmodulen erfassbar ist, wobei unter der Inspektionsposition eine Position des Behälters (11) verstanden wird, in der ein Kontrollmodul den Behälter (11) inspizieren, nämlich ein Merkmal des Behälters (11) überprüfen, erfassen oder auch feststellen kann, wobei jedes Kontrollmodul einen Ist-Zustand eines der Merkmale des Behälters (11) inspiziert und diesen unter Zuhilfenahme einer Auswertungs- oder Steuerungseinheit mit einem Soll-Zustand vergleicht.

2. Behälterbehandlungsanlage nach Anspruch 1, **dadurch gekennzeichnet, dass** mindestens vier und bevorzugt mindestens fünf Kontrollmodule zu einer Baueinheit zusammengefasst sind.

3. Behälterbehandlungsanlage nach Anspruch 1 oder 2, **dadurch gekennzeichnet, dass** der Behälter (11) in der Inspektionsposition (P) von mindestens drei Kontrollmodulen, bevorzugt mindestens vier Kontrollmodulen, vorzugsweise mindestens fünf Kontrollmodulen erfassbar ist.

4. Behälterbehandlungsanlage nach einem der vorhergehenden Ansprüche, **dadurch kennzeichnet, dass** die Behältertransportvorrichtung (2) eine durch die Inspektionsvorrichtung (1) führende Behältertransportstrecke aufweist, entlang der die Behälter (11) durch die Inspektionsvorrichtung (1) transportierbar sind.

5. Behälterbehandlungsanlage nach einem der vorhergehenden Ansprüche, **dadurch gekennzeichnet, dass** die Inspektionsvorrichtung (1) ein Beleuchtungsmittel, insbesondere eine Durchlichtbeleuchtung (D) zum Durchleuchten des Behälters (11), eine Ringbeleuchtung (R) und/oder eine Auflichtbeleuchtung (A) zum Anleuchten des Behälters (11), aufweist.

6. Behälterbehandlungsanlage nach Anspruch 5, **dadurch gekennzeichnet, dass** die Ringbeleuchtung koaxial zu einer Längsachse des Behälters (11) in der Inspektionsposition (P) angeordnet ist.

7. Behälterbehandlungsanlage nach Anspruch 5 oder 6, **dadurch gekennzeichnet, dass** die Auflichtbeleuchtung A zwei im Abstand voneinander auf einer ersten Seite (12) der Behältertransportstrecke angeordnete Leuchtkörper aufweist.

8. Behälterbehandlungsanlage nach einem der Ansprüche 5 bis 7, **dadurch gekennzeichnet, dass** die Durchlichtbeleuchtung D einen auf einer der ersten Seite (12) gegenüberliegenden zweiten Seite (14) der Behältertransportstrecke angeordneten flächigen Leuchtkörper aufweist.

9. Behälterbehandlungsanlage nach einem der vorhergehenden Ansprüche, **dadurch gekennzeichnet, dass** mindestens ein Kontrollmodul mindestens eine Kamera (3.1, 3.2, 4, 5, 6, 7) und/oder mindestens ein Strahlenumlenkungselement (3.1a-3.2e, 5a, 6a, 7a) zur optischen Überprüfung des Behälters (11) aufweist.

10. Behälterbehandlungsanlage nach einem der vorhergehenden Ansprüche, **dadurch gekennzeichnet, dass** mindestens eine Kamera (3.1, 3.2, 4, 5, 6) in einer oberhalb der Behältertransportvorrichtung (2) angeordneten oberen Kameraebene (9) angeordnet ist.

11. Behälterbehandlungsanlage nach einem der vorhergehenden Ansprüche, **dadurch gekennzeichnet, dass** mindestens eine Kamera (7) in einer parallel zur oberen Kameraebene (9) angeordneten in Richtung auf die Behältertransportvorrichtung (2) verschobenen unteren Kameraebene (15) angeordnet ist.

12. Behälterbehandlungsanlage nach einem der vorhergehenden Ansprüche, **dadurch gekennzeichnet, dass**
- das Kontrollmodul zum Überprüfen des Originalitätssicherungselementes in einem Einfahrbereich des Behälters (11) in der Inspektionsvorrichtung (1) und/oder in einem Ausfahrbereich des Behälters (11) aus der Inspektionsvorrichtung (1) mindestens eine Kamera (3.1, 3.2, 4, 5, 6, 7) und ein Strahlenumlenkungselement (3.1a-3.2e, 5a, 6a, 7a) aufweist und/oder
- das Kontrollmodul zur Feststellung der Befüllmenge des Behälters (11) und/oder das Kontrollmodul zur Feststellung der Codeposition am Behälter (11) und/oder das Kontrollmodul zur Lageerfassung des Behälteretiketts auf der ersten Seite (12) des Transportweges eine Kamera (3.1, 3.2, 4, 5, 6, 7) und ein Strahlenumlenkungselement (3.1a-3.2e, 5a, 6a, 7a) aufweist, und/oder
- das Kontrollmodul zur Lageerfassung des Verschlusslogos an dem Behälterverschluss eine senkrecht über der Inspektionsposition (P) angeordnet Kamera (3.1, 3.2, 4, 5, 6, 7) aufweist.

## Claims

1. Container handling system comprising
- an inspection device (1) for checking containers (11), in particular drink containers, and
- a container transport device (2) for moving the containers (11) into an inspection position (P) of the inspection device (1),
wherein the inspection device (1) comprises at least three control modules combined to form a structural unit from the group:
- control module for checking a tamperproof securing element on a container closure,
- control module for determining a filling quantity of the container (11),
- control module for detecting the position of closure logo on the container closure,
- control module for detecting the position of a code on the container (11), and/or
- control module for detecting the position of a container label
wherein the container (11), in the only inspection position (P) can be detected by at least two control modules, wherein the term "inspection position" is understood to be a position of the container (11) in which a control module can inspect the container (11), namely checking, detecting, or also determining a feature of the container (11), wherein each control module inspects an actual state of one of features of the container (11), and compares this with a reference state with the aid of an evaluation unit or control unit.

2. Container handling system according to claim 1, **characterised in that** at least four and preferably at least five control modules are combined to form a structural unit.

3. Container handling system according to claim 1 or 2, **characterised in that** the container (11) in the inspection position (P) can be detected by at least three control modules, preferably at least four control modules, and for particular preference at least five control modules.

4. Container handling system according to any one of the preceding claims, **characterised in that** the container transport device (2) comprises a container transport segment leading through the inspection device (1), along which the containers (11) can be transported through the detection device (1).

5. Container handling system according to any one of the preceding claims, **characterised in that** the inspection device (1) comprises a lighting means, in particular a transmitted light arrangement (D) for transilluminating the container (11), a ring lighting means (R), and/or a direct lighting arrangement (A) for the direct lighting of the container (11).

6. Container handling system according to claim 5, **characterised in that** the ring lighting is arranged coaxially to a longitudinal axis of the container (11) in the inspection position (P).

7. Container handling system according to claim 5 or 6, **characterised in that** the direct lighting arrangement A comprises two lighting bodies arranged at a distance from one another on a first side (12) of the container transport segment.

8. Container handling system according to any one of claims 5 to 7, **characterised in that** the transmitted light arrangement D comprises flat lighting bodies arranged on a second side (14), opposite the first side (12), of the container transport segment.

9. Container handling system according to any one of the preceding claims, **characterised in that** at least one control module comprises at least one camera (3.1, 3.2, 4, 5, 6, 7) and/or at least one beam deflection element (3.1a-3.2e, 5a, 6a, 7a) for the optical checking of the container (11).

10. Container handling system according to any one of the preceding claims, **characterised in that** at least one camera (3.1, 3.2, 4, 5, 6) is arranged in an upper camera plane (9) arranged above the container transport device (2).

11. Container handling system according to any one of the preceding claims, **characterised in that** at least one camera (7) is arranged in a lower camera plane (15), arranged parallel to the upper camera plane (9) and displaced in the direction onto the container transport device (2).

12. Container handling system according to any one of the preceding claims, **characterised in that**
- the control module for checking the tamperproof securing element comprises at least one camera (3.1, 3.2, 4, 5, 6, 7) and a beam deflection element (3.1a-3.2e, 5a, 6a, 7a) in an entry region of the container (11) in the inspection device (1) and/or in an outlet region of the container (11) out of the inspection device (1), and/or
- the control module for determining the filling quantity of the container (11) and/or the control module for determining the position of a code on the container (11) and/or the control module for detecting the position of the container label comprise, on the first side (12) of the transport path, a camera (3.1, 3.2, 4, 5, 6, 7) and a beam deflection element (3.1a-3.2e, 5a, 6a, 7a),
and/or
- the control module for detecting the position of the closure logo on the container closure comprises a camera (3.1, 3.2, 4, 5, 6, 7) arranged perpendicular above the inspection position (P).

## Revendications

1. Installation de traitement de récipients avec
- un dispositif d'inspection (1) pour le contrôle de récipients (11), en particulier de récipients de boisson, et
- un dispositif de transport de récipients (2) pour le déplacement des récipients (11) dans une position d'inspection (P) du dispositif d'inspection (1),
dans laquelle le dispositif d'inspection (1) présente au moins trois modules de contrôle regroupés en une unité de construction tirés du groupe :
- module de contrôle pour la vérification d'un élément d'inviolabilité au niveau d'une fermeture de récipient,
- module de contrôle pour la constatation d'une quantité de remplissage du récipient (11),
- module de contrôle pour la détection de position d'un logo de fermeture au niveau de la fermeture de récipient,
- module de contrôle pour la constatation d'une position de code au niveau du récipient (11) et/ou
- module de contrôle pour la détection de position d'une étiquette de récipient,
dans laquelle le récipient (11) peut être détecté dans la seule position d'inspection (P) par au moins deux modules de contrôle, dans laquelle il est entendu par position d'inspection une position du récipient (11), dans laquelle un module de contrôle peut inspecter le récipient (11), à savoir vérifier, détecter ou aussi constater une caractéristique du récipient (11), dans laquelle chaque module de contrôle inspecte un état réel d'une des caractéristiques du récipient (11) et le compare avec un état de consigne à l'aide d'une unité d'évaluation ou de commande.

2. Installation de traitement de récipients selon la revendication 1, **caractérisée en ce qu'**au moins quatre et de préférence au moins cinq modules de contrôle sont regroupés en une unité de construction.

3. Installation de traitement de récipients selon la revendication 1 ou 2, **caractérisée en ce que** le récipient (11) peut être détecté dans la position d'inspection (P) par au moins trois modules de contrôle, de préférence au moins quatre modules de contrôle, de manière préférée au moins cinq modules de contrôle.

4. Installation de traitement de récipients selon l'une quelconque des revendications précédentes, **caractérisée en ce que** le dispositif de transport de récipients (2) présente un trajet de transport de récipients guidant à travers le dispositif d'inspection (1), le long duquel les récipients (11) peuvent être transportés à travers le dispositif d'inspection (1).

5. Installation de traitement de récipients selon l'une quelconque des revendications précédentes, **caractérisée en ce que** le dispositif d'inspection (1) présente un moyen d'éclairage, en particulier un éclairage par transmission (D) pour l'éclairage par transmission du récipient (11), un éclairage annulaire (R) et/ou un éclairage par incidence (A) pour l'éclairage incident du récipient (11).

6. Installation de traitement de récipients selon la revendication 5,
**caractérisée en ce que** l'éclairage annulaire est agencé coaxialement à un axe longitudinal du récipient (11) dans la position d'inspection (P).

7. Installation de traitement de récipients selon la revendication 5 ou 6,
**caractérisée en ce que** l'éclairage par incidence A présente deux corps lumineux agencés à distance l'un de l'autre sur un premier côté (12) du trajet de transport de récipients.

8. Installation de traitement de récipients selon l'une quelconque des revendications 5 à 7,
**caractérisée en ce que** l'éclairage par transmission D présente un corps lumineux plan agencé sur un deuxième côté (14) du trajet de transport de récipients opposé au premier côté (12).

9. Installation de traitement de récipients selon l'une quelconque des revendications précédentes,
**caractérisée en ce qu'**au moins un module de contrôle présente au moins une caméra (3.1, 3.2, 4, 5, 6, 7) et/ou au moins un élément de déviation de faisceaux (3.1a-3.2e, 5a, 6a, 7a) pour la vérification optique du récipient (11).

10. Installation de traitement de récipients selon l'une quelconque des revendications précédentes,
**caractérisée en ce qu'**au moins une caméra (3.1, 3.2, 4, 5, 6) est agencée dans un plan de caméra supérieur (9) agencé au-dessus du dispositif de transport de récipients (2).

11. Installation de traitement de récipients selon l'une quelconque des revendications précédentes,
**caractérisée en ce qu'**au moins une caméra (7) est agencée dans un plan de caméra inférieur (15) décalé en direction du dispositif de transport de récipients (2) agencé parallèlement au plan de caméra supérieur (9).

12. Installation de traitement de récipients selon l'une quelconque des revendications précédentes,
**caractérisée en ce que**
- le module de contrôle pour la vérification de l'élément d'inviolabilité présente dans une zone d'entrée du récipient (11) dans le dispositif d'inspection (1) et/ou dans une zone de sortie du récipient (11) du dispositif d'inspection (1) au moins une caméra (3.1, 3.2, 4, 5, 6, 7) et un élément de déviation de faisceaux (3.1a-3.2e, 5a, 6a, 7a) et/ou
- le module de contrôle pour la constatation de la quantité de remplissage du récipient (11) et/ou le module de contrôle pour la constatation de la position de code au niveau du récipient (11) et/ou le module de contrôle pour la détection de position de l'étiquette de récipient présente sur le premier côté (12) du parcours de transport une caméra (3.1, 3.2, 4, 5, 6, 7) et un élément de déviation de faisceaux (3.1a-3.2e, 5a, 6a, 7a),
et/ou
- le module de contrôle pour la détection de position du logo de fermeture au niveau de la fermeture de récipient présente une caméra (3.1, 3.2, 4, 5, 6, 7) agencée perpendiculairement au-dessus de la position d'inspection (P).
